# EUROPEAN PATENT SPECIFICATION

(11) **EP 3 289 850 B1**
(45) Date of publication and mention of the grant of the patent: **17.07.2019**
(21) Application number: 17168601.7
(22) Date of filing: 28.04.2017
(51) Int. Cl.: A01D 34/00

(54) **LAWN MOWER ROBOT AND METHOD FOR SELECTING A CUTTING METHOD OF A LAWN MOWER ROBOT**
RASENMÄHERROBOTER UND VERFAHREN ZUR AUSWAHL EINER MÄHMETHODE EINES RASENMÄHERROBOTERS
ROBOT POUR TONDRE LE GAZON ET PROCEDE DE SELECTION D'UN PROCEDE DE COUPE D'UN ROBOT POUR TONDRE LE GAZON

(30) Priority: 02.09.2016 IT 201600089384
(43) Date of publication of application: 07.03.2018
(73) Proprietor: Bernini, Fabrizio, 52021 Bucine - Arezzo (IT)
(72) Inventor: Bernini, Fabrizio, 52021 Bucine - Arezzo (IT)
(74) Representative: Firmati, Leonardo

(56) References cited:
- EP-A2- 1 933 467
- EP-A2- 2 412 223
- WO-A1-2016/102143

## Description

This invention relates to a multimodal lawn mower robot and the relative method used for selecting the cutting method to be used. Lawn mower robots usually operate inside a working area, delimited by a perimeter string, following an irregular route, so that it is possible to reduce the risk of an incomplete cutting of the grass in some areas of the garden. There are various cutting methods which the lawn mower robot may use to carry out its work, in particular with regards to the control of the route to be followed. For example, the robot might move along a random route, that is, moving in a straight line and changing direction every time it encounters an obstacle or the perimeter string which delimits the working area. Some robots use, on the other hand, a satellite navigation system, for example GPS, to improve the accuracy with which they move inside the working area in such a way as to reach all parts of the garden. A further possible method comprises moving the robot according to a spiral route in such a way as to reduce the effort of the blade motor if the robot cuts an area of the garden in which the grass is particularly high or thick. Example of known devices in this field can be found in documents EP2412223, WO2016102143 and EP1933467.

However, each of the possible cutting methods, of which some have been described above, with which a lawn mower robot can be controlled, has drawbacks which make it not very efficient in certain conditions. For example, if the robot operates according to the random cutting method in a garden with many obstacles, it is possible that some areas are not reached since when the robot moves towards them it is very likely that it strikes against an obstacle and therefore changes direction. If, on the other hand, a cutting method is chosen wherein the movements of the robot are controlled by a satellite navigation system, there can be problems when the signalled is screened by buildings, roofs, trees or other items; in this case, the robot blocks, since it no longer receives information on the route to be followed.

However, the spiral cutting method causes an increase in the time necessary to complete the cutting operations since, by following this method, the robot will pass several times over the same route.

In this context, the technical purpose which forms the basis of this invention is to provide a lawn mower robot and relative method of use which overcomes at least some of the above-mentioned drawbacks of the prior art.

More specifically, the aim of this invention is to provide a lawn mower robot which is able to select between several possible methods the most efficient cutting method as a function of the specific features of the working area in which the robot is to operate.

The technical purpose indicated and the aims specified are substantially achieved by a lawn mower robot comprising the technical features described in the appended claims. The dependent claims correspond to possible different embodiments of the invention.

The invention accordingly provides a lawn mower robot equipped with: a plurality of sensors which are able to measure a series of parameters relative to the specific features of the working area in which the robot operates, a legible memory which stores a plurality of possible cutting methods and for each of them a plurality of threshold values relative to the parameters which can be measured by the sensors and a control unit programmed for selecting the most efficient cutting method as a function of a comparison made between the parameters measured by the sensors and the threshold values stored in the legible storage support.

Further features and advantages of the invention are more apparent in the non-limiting description which follows of a preferred embodiment of a lawn mower robot illustrated in the accompanying drawings.

The description is set out below with reference to the accompanying drawings which are provided solely for purposes of illustration without restricting the scope of the invention and in which:
- Figure 1 schematically shows a lawn mower robot in which are denoted the features according to this invention;
- Figure 2 shows the block diagram relative to the method for selecting the cutting method according to this invention;

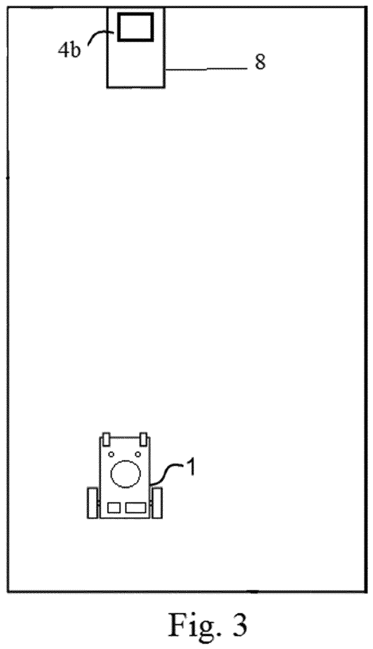

- Figure 3 schematically shows a robot in use according to this invention.

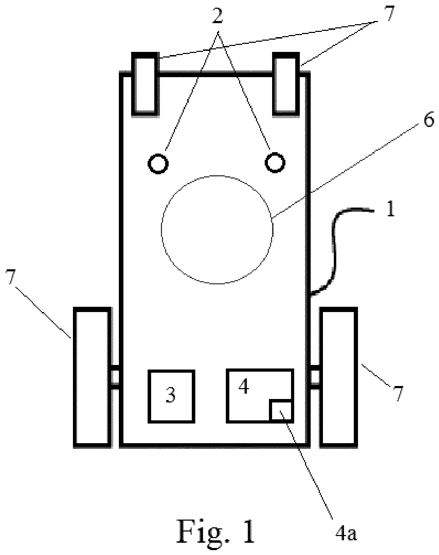

Figure 1 shows a lawn mower robot 1 equipped with a plurality of sensors 2 configured to measure the operating conditions in which the robot 1 is to operate.

The sensors 2 may, for example, comprise accelerometers, position sensors (GPS), perimeter signal receivers, impact sensors on the body of the lawn mower, inclinometers, gyroscopes, inertial sensors, force sensors on the cutting device or ultrasound sensors.

The numeral 3 denotes a legible storage support on which are stored a plurality of possible cutting methods with which it is possible to move the robot 1.

According to the invention, the following cutting methods are stored:
- cutting method with movement controlled by a satellite navigation signal;
- cutting method with spiral movement;
- cutting method with random movement.

A method may also be stored for cutting in partitions as described in patent document EP2428107 in the name of the same Applicant.

Advantageously, the support 3 can store further cutting methods. For each of the methods stored in the support 3 a plurality of threshold values, associated with the parameters which are measured by the sensors 2, is also stored.

The numeral 4 denotes a unit for controlling the robot 1 configured for selecting the cutting method to be used for moving the robot 1.

Preferably, the control unit 4 is equipped with a GPS antenna or other device forming part of a position measuring system.

With reference to the robot 1, the numeral 5 denotes a supporting structure configured to house the essential components of the robot. In effect, the robot 1 also comprises cutting means 6 operatively associated with the supporting structure 5.

The robot 1 also comprises movement means 7 comprising at least one pair of drive wheels rotatable about an axis of rotation and configured for moving at least the cutting means 6 along a working surface. It should be noted that the term work surface means the surface of a lawn or a stretch grass to be adjusted by cutting (not illustrated in the accompanying drawings).

The supporting structure 5 comprises the chassis of the robot 1 configured also for fixing the movement means 7, in particular the driving wheels. The movement means 7 may also comprise swivelling wheels positioned in front of the robot 1.

The control unit 4 may be positioned entirely on the supporting structure 5 or partly set up on the supporting structure 5 and like a remote control unit 4b for example set up in a station 8 for recharging the robot 1. In this case, the term lawn mower robot includes the cutting system which comprises both the self-propelled robot and the remote control unit 4b, for example its recharging station.

With reference to the control unit 4, the selection occurs by making a comparison between the parameters measured by the sensors 2 with the threshold values contained in the support 3. According to this comparison, one of the methods contained in the support 3 will be more efficient than the others and will therefore be selected by the control unit 4.

For example, if the sensors 2 measure a high force on the motor of the cutting means 6 it means that the robot 1 is working in an area where the grass is particularly thick or high and it will therefore be necessary to pass over that area several times; for this reason, it will be particularly advantageous to proceed with a spiral cutting method. If, on the other hand, when the robot 1 is moved using a satellite navigation system, the sensors 2 detect a worsening of the GPS signal, there would be a loss of efficiency of this method and the control unit 4 would consequently select an alternative so that the robot 1 can continue to move without interrupting the cutting operations.

According to the invention, the possible cutting methods which can be selected by the control unit 4 are inserted in the legible storage support 3 according to a precise order which defines an order of priority. In this way, if, following the comparison of the parameters measured by the sensors 2 with the threshold values, two or more cutting methods are found to be equally selectable (since they are equally efficient) the control unit 4 will select the cutting method which is first in the list of cutting methods stored in the legible storage support 3.

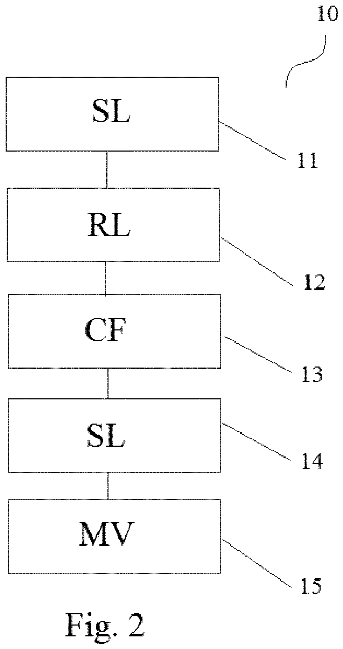

Figure 2 shows the flow diagram 10 which represents in detail the steps of the method for selecting the cutting method according to this invention. The method is performed by a control unit 4 mounted on a lawn mower robot configured to cut the grass inside a working area for example delimited by an outer string.

The method comprises moving 11 the lawn mower robot inside the work area according to a first cutting method corresponding to the first cutting method of the list of possible cutting methods stored on the support 2. In effect, when the lawn mower robot 1 is started it is not yet possible to make a comparison, since the sensors 2 have still not measured any parameter. Preferably, the first method moves the robot 1 by means of a satellite navigation system, preferably of the GPS type.

The method then comprises measuring 12 whether during the cutting operations there is a change in the operating conditions of the lawn mower robot, such as, for example:
- a significant reduction in the quality of the GPS signal;
- an increase in the force of the blade motor;
- a large number of impacts;
- the time since the last cutting operation in that area.

Advantageously, the parameters to be controlled can be selected as a function of the possible cutting methods stored on the support 3.

The method also comprises comparing 13 the new parameters measured and the threshold values stored in legible storage support 2.

Depending on the comparison, the method comprises selecting 14 between the possible methods stored on the support 3 the one which optimises the efficiency of the robot 1 so as to move 14 the robot 1 according to the selected method.

The method also comprises the steps (not illustrated in the accompanying drawings) for storing a plurality of possible cutting methods according to an ordered list which defines an order of priority. The order of priority determines the criterion according to which these methods are selected if, after the comparison step, two or more of them can be can be selected equivalently.

According to the invention, at least the following cutting methods are stored:
- cutting method with movement controlled by a satellite navigation signal;
- cutting method with spiral movement;
- cutting method with random movement.

Preferably, the cutting method with the movement controlled by a satellite navigation system is always the first method stored on the legible storage support (3), in this way, when the lawn mower robot is started this cutting method will always be the first choice made by the control unit (4), which it will maintain until the sensors (2) detect a change in the operating conditions of the lawn mower robot.

In this way, the lawn mower robot will always operate using the most efficient method in every part of the work area and in accordance with the input which it receives from the sensors configured to detect the operating conditions in which the lawn mower robot is operating.

## Claims

1. A lawn mower robot (1) comprising:
- a plurality of sensors (2) designed for detecting a plurality of parameters relative to the operating conditions of the lawn mower robot;
- a legible storage support (3);
- a control unit (4);
- a satellite positioning system (4a); wherein
- the legible storage support (3) is configured for storing at least:
- a first cutting method wherein the lawn mower robot is configured to follow a path based on the indications of the satellite positioning system;
- a second cutting method wherein the lawn mower robot is configured to follow a spiral path;
- a third cutting method wherein the lawn mower robot is configured to follow a random path.
- a plurality of threshold values relative to the plurality of parameters for each cutting method;
- the control unit (4) is programmed for comparing at least one of the parameters relative to the operating conditions of the lawn mower robot with a respective threshold value and for selecting a cutting method to be carried out as a function of the result of the comparison; wherein the cutting methods of the plurality of possible cutting methods are stored in the legible storage support (3) according to an ordered list which defines an order of priority of the cutting methods;
wherein the control unit (4) is programmed for selecting the cutting method which is the first in the order of priority defined by the list stored in the legible storage support (3), if two or more cutting methods can be selected equivalently after the comparison between the parameters relative to the operating conditions of the lawn mower robot and the threshold values.

2. The lawn mower robot according to claim 1 wherein the satellite positioning system (4a) is of the GPS type.

3. The lawn mower robot according to claim 1 or 2, wherein the plurality of sensors (2) is configured for detecting one or more of the following parameters: position of robot, force of cutting motor, frequency of impacts, time passed since last cutting operation in a predetermined area.

4. A method for selecting a cutting method of a lawn mower robot (1) according to the preceding claims, the method comprising the following steps:
- moving the lawn mower robot (1) inside the work area according to a first cutting method selected from the plurality of possible cutting methods;
- detecting by at least one of the plurality of sensors (2) a change in at least one of the parameters of the plurality of parameters relative to the operating conditions of the lawn mower robot;
- comparing the parameters detected with the threshold values associated with each of the cutting methods of the plurality of possible cutting methods in the legible storage support (3);
- selecting a cutting method as a function of the comparison performed in the previous step, selecting the cutting method which is the first in the order of priority defined by the list stored in the legible storage support (3), if two or more cutting methods can be selected equivalently after the comparison between the parameters relative to the operating conditions of the lawn mower robot and the threshold values;
- moving the lawn mower robot (1) inside the work area according to a selected cutting method;
- storing the cutting methods of the plurality of possible cutting methods in the legible storage support (3) according to an ordered list which defines an order of priority of the cutting methods;
- storing at least a first cutting method wherein the lawn mower robot follows a path based on the indications of a satellite positioning system;
- storing at least a second cutting method wherein the lawn mower robot follows a spiral path;
- storing at least a third cutting method wherein the lawn mower robot follows a random path.

## Patentansprüche

1. Rasenmäherroboter (1), umfassend:
- eine Vielzahl an Sensoren (2), die ausgestaltet sind, um eine Vielzahl an Parametern
in Bezug auf die Betriebsbedingungen des Rasenmäherroboters zu erfassen;
- eine lesbares Speichermedium (3);
- eine Steuereinheit (4);
- ein Satellitenortungssystem (4a), wobei
- das lesbare Speichermedium (3) ausgelegt ist, um mindestens zu speichern:
- eine erste Mähmethode, wobei der Rasenmäherroboter ausgelegt ist, einem Weg zu folgen, basierend auf den Angaben des Satellitenortungssystems;
- eine zweite Mähmethode, wobei der Rasenmäherroboter ausgelegt ist, um einem spiralförmigen Weg zu folgen;
- eine dritte Mähmethode, wobei der Rasenmäherroboter ausgelegt ist, um einem Zufallsweg zu folgen;
- eine Vielzahl an Schwellenwerten, die sich auf die Vielzahl an Parametern für jede Mähmethode beziehen,
- wobei die Steuereinheit (4) programmiert ist, um mindestens einen der Parameter in Bezug auf die Betriebsbedingungen des Rasenmäherroboters mit einem jeweiligen Schwellenwert zu vergleichen und um eine Mähmethode auszuwählen, die als eine Funktion des Ergebnisses des Vergleichs auszuführen ist, wobei die Mähmethoden der Vielzahl an möglichen Mähmethoden im lesbaren Speichermedium (3) nach einer geordneten Liste gespeichert sind, die eine Prioritätsreihenfolge der Mähmethoden definiert,
- wobei die Steuereinheit (4) programmiert ist, um die Mähmethode auszuwählen, die die erste in der Prioritätsreihenfolge ist, die durch die Liste definiert ist, die im lesbaren Speichermedium (3) gespeichert ist, wenn eine oder mehrere Mähmethoden gleichwertig nach dem Vergleich der Parameter in Bezug auf die Betriebsbedingungen des Rasenmäherroboters und der Schwellenwerte ausgewählt werden können.

2. Rasenmäherroboter nach Anspruch 1, wobei das Satellitenortungssystem (4a) vom GPS-Typ ist.

3. Rasenmäherroboter nach Anspruch 1 oder 2, wobei die Vielzahl an Sensoren (2) ausgelegt ist, um einen oder mehrere der folgenden Parameter zu erfassen: Roboterposition, Motormähkraft, Häufigkeit von Zusammenstößen, seit dem letzten Mähvorgang vergangene Zeit in einem vorgegebenen Bereich.

4. Verfahren zur Auswahl einer Mähmethode eines Rasenmäherroboters (1) nach einem der vorhergehenden Ansprüche, wobei die Methode die folgenden Schritte umfasst:
- Bewegen des Rasenmäherroboters (1) im Arbeitsbereich nach einer ersten Mähmethode, ausgewählt aus der Vielzahl an möglichen Mähmethoden;
- Erfassen einer Veränderung in mindestens einem der Parameter der Vielzahl an Parametern in Bezug auf die Betriebsbedingungen des Rasenmäherroboters durch mindestens einen der Vielzahl an Sensoren (2);
- Vergleichen der erfassten Parameter mit den Schwellenwerten, die mit einer jeden der Mähmethoden der Vielzahl möglicher Mähmethoden im lesbaren Speichermedium (3) assoziiert sind;
- Auswählen einer Mähmethode als eine Funktion des im vorherigen Schritt durchgeführten Vergleichs, indem die Mähmethode ausgewählt wird, die die erste in der Prioritätsreihenfolge ist, die durch die Liste definiert ist, die im lesbaren Speichermedium (3) gespeichert ist, wenn eine oder mehrere Mähmethoden gleichwertig nach dem Vergleich zwischen den Parametern in Bezug auf die Betriebsbedingungen des Rasenmäherroboters und der Schwellenwerte ausgewählt werden können;
- Bewegen des Rasenmäherroboters (1) im Arbeitsbereich nach einer ausgewählten Mähmethode;
- Speichern der Mähmethoden der Vielzahl möglicher Mähmethoden im lesbaren Speichermedium (3) nach einer geordneten Liste, die eine Prioritätsreihenfolge der Mähmethoden definiert;
- Speichern von mindestens einer ersten Mähmethode, wobei der Rasenmäherroboter einem Weg folgt, basierend auf den Angaben eines Satellitenortungssystems;
- Speichern von mindestens einer zweiten Mähmethode, wobei der Rasenmäherroboter einem spiralförmigen Weg folgt;
- Speichern von mindestens einer dritten Mähmethode, wobei der Rasenmäherroboter einem Zufallsweg folgt.

## Revendications

1. Robot pour tondre le gazon (1) comprenant :
- une pluralité de capteurs (2) conçus pour détecter une pluralité de paramètres
relatifs aux conditions de fonctionnement du robot pour tondre le gazon ;
- un support de stockage (3) lisible ;
- une unité de commande (4) ;
- un système de positionnement par satellite (4a) ; dans lequel
- le support de stockage (3) lisible est configuré pour stocker au moins :
- un premier procédé de coupe dans lequel le robot pour tondre le gazon est configuré pour suivre un parcours basé sur les indications du système de positionnement par satellite ;
- un second procédé de coupe dans lequel le robot pour tondre le gazon est configuré pour suivre un parcours en spirale ;
- un troisième procédé de coupe dans lequel le robot pour tondre le gazon est configuré pour suivre un parcours aléatoire.
- une pluralité de valeurs de seuil relatives à la pluralité de paramètres pour chaque procédé de coupe ;
- l'unité de commande (4) est programmée pour comparer au moins un des paramètres relatifs aux conditions de fonctionnement du robot pour tondre le gazon à une valeur de seuil respective et pour sélectionner un procédé de coupe à effectuer en fonction du résultat de la comparaison ; dans lequel les procédés de coupe de la pluralité de procédés de coupe possibles sont stockés dans le support de stockage (3) lisible selon une liste ordonnée définissant un ordre de priorité des procédés de coupe ;
dans lequel l'unité de commande (4) est programmée pour sélectionner le procédé de coupe étant le premier dans l'ordre de priorité défini par la liste stockée dans le support de stockage (3) lisible, si deux ou plusieurs procédés de coupe peuvent être sélectionnés de manière équivalente après la comparaison entre les paramètres relatifs aux conditions de fonctionnement du robot pour tondre le gazon et les valeurs de seuil.

2. Robot pour tondre le gazon selon la revendication 1, dans lequel le système de positionnement par satellite (4a) est du type GPS.

3. Robot pour tondre le gazon selon la revendication 1 ou 2, dans lequel la pluralité de capteurs (2) est configurée pour détecter un ou plusieurs des paramètres suivants : la position du robot, la force du moteur de coupe, la fréquence des impacts, le temps écoulé depuis la dernière opération de coupe dans une zone prédéterminée.

4. Procédé de sélection d'un procédé de coupe d'un robot pour tondre le gazon (1) selon les revendications précédentes, le procédé comprenant les étapes suivantes :
- déplacer le robot pour tondre le gazon (1) à l'intérieur de la zone de travail selon un premier procédé de coupe sélectionné à partir de la pluralité de procédés de coupe possibles ;
- détecter par au moins un de la pluralité de capteurs (2) une modification dans au moins un des paramètres de la pluralité de paramètres relatifs aux conditions de fonctionnement du robot pour tondre le gazon ;
- comparer les paramètres détectés aux valeurs de seuil associées à chacun des procédés de coupe de la pluralité de procédés de coupe possibles dans le support de stockage (3) lisible ;
- sélectionner un procédé de coupe en fonction de la comparaison réalisée à l'étape précédente, sélectionner le procédé de coupe étant le premier dans l'ordre de priorité défini par la liste stockée dans le support de stockage (3) lisible, si deux ou plusieurs procédés de coupe peuvent être sélectionnés de manière équivalente après la comparaison entre les paramètres relatifs aux conditions de fonctionnement du robot pour tondre le gazon et les valeurs de seuil ;
- déplacer le robot pour tondre le gazon (1) à l'intérieur de la zone de travail selon un procédé de coupe sélectionné ;
- stocker les procédés de coupe de la pluralité de procédés de coupe possibles dans le support de stockage (3) lisible selon une liste ordonnée définissant un ordre de priorité des procédés de coupe ;
- stocker au moins un premier procédé de coupe dans lequel le robot pour tondre le gazon suit un parcours basé sur les indications d'un système de positionnement par satellite ;
- stocker au moins un second procédé de coupe dans lequel le robot pour tondre le gazon suit un parcours en spirale ;
- stocker au moins un troisième procédé de coupe dans lequel le robot pour tondre le gazon suit un parcours aléatoire.
